# FASCICULE DE BREVET EUROPEEN

(11) **EP 2 132 055 B1**
(45) Date de publication et mention de la délivrance du brevet: **26.12.2012**
(21) Numéro de dépôt: 08788032.4
(22) Date de dépôt: 21.03.2008
(51) Int. Cl.: B60K 11/04, B62D 25/08

(54) **Procédé de montage d'un élément de soubassement transversal et d'une face avant technique sur un véhicule automobile**
Verfahren zur Montage eines transversalen Unterstrukturelements und einer technischen Fronttafel
Method for mounting a transverse understructure member and a technical front panel

(30) Priorité: 03.04.2007 FR 0754227
(43) Date de publication de la demande: 16.12.2009
(73) Titulaire: Renault SAS, 92100 Boulogne Billancourt (FR)
(72) Inventeur: FLANDIN, Michaël, F-28410 Broué (FR)
(74) Mandataire: Rougemont, Bernard
(86) Numéro de dépôt international: PCT/FR2008/050496
(87) Numéro de publication internationale: WO 2008/139071

(56) Documents cités:
- FR-A- 2 870 197
- JP-A- 2003 237 628
- JP-A- 2003 327 162
- US-A- 3 123 170
- US-A1- 2005 062 315

## Description

L'invention concerne un procédé de montage, sur un véhicule automobile, d'au moins un élément de soubassement transversal et d'une face avant technique destinée à être montée à une extrémité longitudinale d'un élément de structure de caisse du véhicule.

L'invention concerne plus particulièrement un procédé de montage, sur un véhicule automobile, d'au moins un élément de soubassement transversal et d'une face avant technique destinée à être montée à une extrémité longitudinale d'un élément de structure de caisse comprenant deux longerons opposés transversalement et deux parties de l'élément de structure de caisse opposées transversalement.

On connaît de nombreux exemples de procédés de montage de ce type.

Il est connu selon un tel procédé de monter un élément de soubassement d'un véhicule de bas en haut selon une direction verticale.

Par exemple, il est connu de monter une traverse de bas en haut selon la direction verticale sous des éléments ou pendeloques qui s'étendent verticalement vers le bas à partir des longerons du véhicule.

On peut par la même occasion monter une face avant technique reposant sur l'élément de soubassement du véhicule.

Ainsi, il est connu du document FR-A-2.838.094 de monter verticalement de bas en haut l'ensemble constitué de la traverse et de la face avant technique reposant sur ladite traverse.

Le document FR-A-2 870 797 décrit un procédé de montage selon le préambule de la revendication 1.

Dans certains cas, l'encombrement transversal de la face avant technique rend impossible le montage directement selon la direction verticale. C'est par exemple le cas lorsque l'encombrement transversal de la face avant technique est supérieur à l'encombrement transversal de pendeloques.

Dans ce cas, il est connu de mettre en position la face avant technique sur la traverse formant l'élément de soubassement, puis de la basculer légèrement vers l'avant, puis de fixer la traverse sous les pendeloques, la face avant technique passant alors devant les pendeloques, puis enfin de rabattre la face avant technique contre l'extrémité longitudinale de l'élément de structure de caisse avant de l'y fixer.

Dans ce cas, la position finale de la face avant technique est déterminée par sa mise en position préalable sur l'élément de soubassement.

Or, dans la majorité des véhicules actuel, la face avant technique porte aussi bon nombre de points de fixation d'éléments de carrosserie du véhicule, notamment des points de fixation d'un bouclier avant du véhicule.

Le positionnement final de ces points de fixation est déterminant pour l'aspect esthétique final du véhicule. En effet, le bouclier doit être mis en place de manière très précise par rapport à l'élément de structure de caisse du véhicule, qui est destiné à porter des éléments de carrosserie tels que le capot, les ailes ou les projecteurs, avec lesquels le bouclier doit s'ajuster parfaitement.

Or, les jeux de mise en position de l'élément de soubassement sont très imprécis, car les pendeloques auxquelles cet élément est fixé sont elles-mêmes mises en place avec des jeux très élevés par rapport à l'élément de structure de caisse du véhicule, mais aussi avec un référentiel différent.

Il serait donc souhaitable de pouvoir mettre en position la face avant technique directement par rapport à l'élément de structure de caisse du véhicule pour garantir des jeux de mise en position minimaux, tout en conservant le procédé de montage décrit précédemment, réalisé de bas en haut selon une direction verticale, qui est parfaitement adapté à un montage en grande série le long d'une chaîne de fabrication.

Dans ce but, l'invention propose un procédé du type décrit précédemment comportant au moins deux étapes de mise en position de la face avant technique par rapport à l'élément de structure de caisse, notamment une étape de mise en position verticale de la face avant technique et une étape de mise en position transversale de la face avant technique.

Dans ce but, l'invention propose un procédé du type décrit précédemment, caractérisé en ce qu'il comporte au moins :
- une première étape au cours de laquelle la face avant technique est positionnée sur un élément de soubassement transversal par l'intermédiaire d'un moyen de liaison autorisant un pivotement de ladite face avant technique autour d'un axe transversal et une translation verticale de ladite face avant technique,
- une deuxième étape au cours de laquelle la face avant technique est basculée vers l'avant autour du moyen de liaison d'axe transversal,
- une troisième étape au cours de laquelle l'élément de soubassement et la face avant technique en position basculée sont déplacés du bas vers le haut jusqu'au véhicule,
- une quatrième étape au cours de laquelle la face avant technique est basculée de manière qu'au moins un premier moyen porté par un bord supérieur de la face avant technique accoste un deuxième moyen complémentaire porté par au moins une des parties opposées transversalement de l'élément de structure de caisse,
- une cinquième étape au cours de laquelle la face avant technique est poussée vers l'arrière sur le véhicule automobile de manière que le premier moyen monte sur le deuxième moyen, la face avant technique se soulevant de l'élément de soubassement transversal.

Le procédé comporte de surcroît une sixième étape au cours de laquelle un doigt longitudinal, porté par un des côtés du bord supérieur de la face avant technique, est réaligné avec un troisième moyen complémentaire porté par une des parties opposées de l'élément de structure de caisse, pour recentrer transversalement la face avant technique.

L'invention concerne aussi un véhicule pour la mise en oeuvre du procédé décrit précédemment.

Selon d'autres caractéristiques de l'invention :
- la face avant technique comporte une partie centrale porteuse notamment d'éléments de refroidissement du véhicule, de parties latérales opposées fixés aux bords verticaux opposés de la partie centrale, et d'une traverse supérieure comportant le bord supérieur.
- le bord supérieur de la traverse de la face avant technique comporte à chacune de ses extrémités le premier moyen dont un élément de guidage ou "avaloir" comportant au moins une surface inclinée vers la haut d'arrière en avant est destinée à monter sur une surface plane correspondante associée formant le second moyen portée par chacune des parties opposées de l'élément de structure de caisse,
- le premier moyen du bord supérieur de la traverse de la face avant technique comporte en avant de l'élément de guidage une surface plane destinée à reposer sur la surface plane correspondante associée portée par chacune des parties de l'élément de structure de caisse.
- une des parties de l'élément de structure de caisse comporte un élément de référence destiné à coopérer avec le doigt porté par le côté du bord supérieur de la traverse de la face avant technique, notamment un perçage destiné à recevoir le doigt ou une surface plane destinée à recevoir transversalement le doigt en butée.

D'autres caractéristiques et avantages de l'invention apparaîtront à la lecture de la description détaillée qui suit pour la compréhension de laquelle on se reportera aux dessins annexés dans lesquels :
- les figures 1 à 5 sont des vues schématiques en coupe longitudinale illustrant les cinq premières étapes du procédé selon l'invention,
- les figures 6 à 8 sont des vues schématiques de dessus illustrant les quatrième à sixième étapes du procédé selon l'invention,
- la figure 9 est une vue en perspective éclatée de la face avant technique.

Dans la description qui va suivre, des chiffres de référence identiques désignent des pièces identiques ou ayant des fonctions similaires.

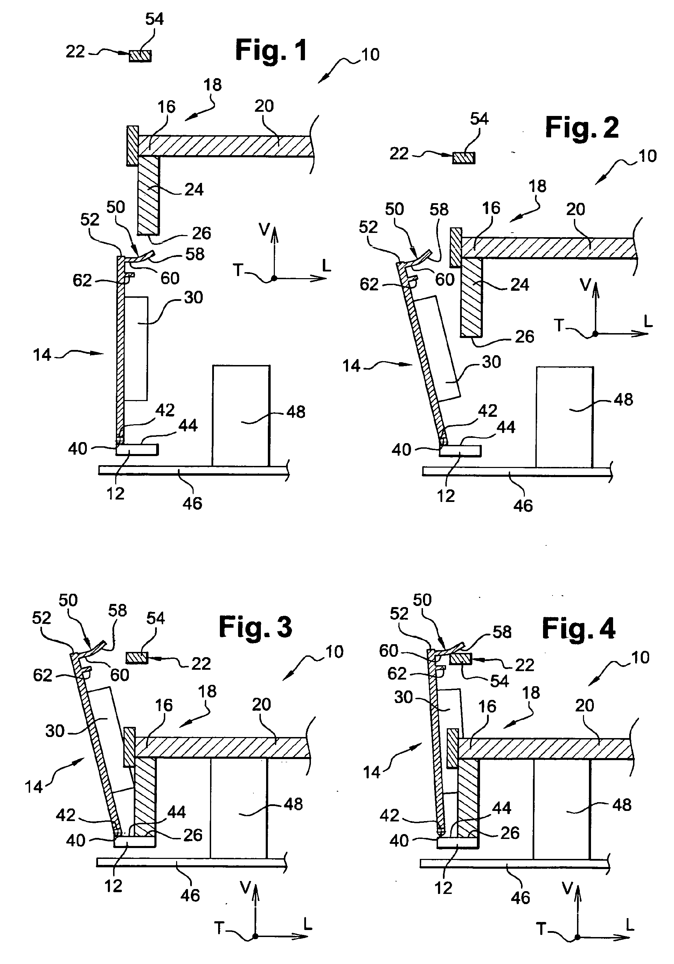

On a représenté sur les figures 1 à 8 les différentes étapes d'un procédé selon l'invention. Le procédé sera décrit en références aux directions du trièdre "T", "L", "V", ou "T" désigne la direction transversale, "L" désigne la direction longitudinale et "V" désigne la direction verticale.

De manière connue, un tel procédé est destiné à permettre le montage sur un véhicule automobile 10, d'au moins un élément de soubassement 12 transversal, par exemple une traverse inférieure, et d'une face avant technique 14 destinée à être montée à une extrémité longitudinale 16 d'un élément 18 de structure de caisse.

De manière connue, l'élément 18 de structure de caisse comporte au moins deux longerons 20 opposés transversalement et deux parties 22 de l'élément 18 de structure de caisse opposées transversalement, notamment des ensembles de ferrage destinés à porter des phares (non représentés du véhicule). Chaque longeron 20 porte des pendeloques 24 qui s'étendent verticalement vers le bas à partir de chaque longeron, et dont les extrémités inférieures 26 sont destinées à porter l'élément 12 de soubassement une fois fixé.

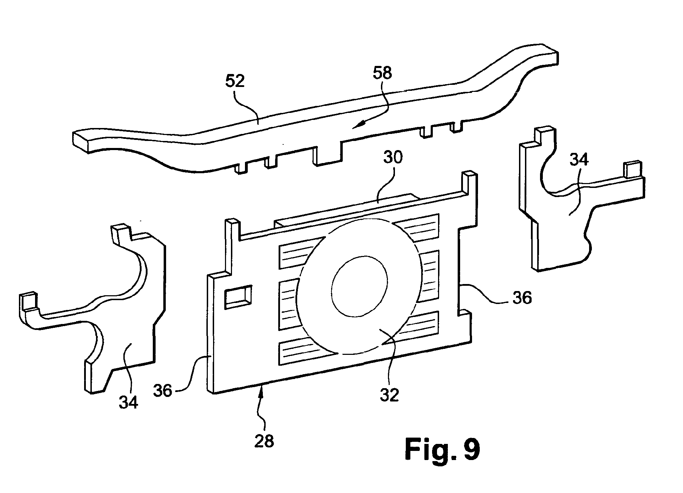

Comme l'illustrent les figures 1 à 8 et plus précisément la figure 9, la face avant technique 14 comporte une partie centrale 28 porteuse notamment d'éléments de refroidissement du véhicule, tels que par exemple un radiateur 30 et un moto-ventilateur 32 de refroidissement, à laquelle sont adjointes des parties latérales opposées 34 fixées aux bords verticaux 36 opposés de la partie centrale 28, et une traverse supérieure 38.

Conformément à l'invention, le procédé selon l'invention comporte une première étape, représentée à la figure 1, au cours de laquelle la face avant technique 14 est positionnée sur l'élément 12 de soubassement transversal par l'intermédiaire d'un moyen de liaison 40 autorisant un pivotement de ladite face avant technique autour d'un axe transversal d'orientation "T" et autorisant aussi, comme on le verra plus loin dans la présente description, une translation verticale de ladite face avant technique 14.

Le moyen 40 de liaison peut par exemple être constitué très simplement d'au moins une patte portée par un bord inférieur 42 de la face avant technique, qui est reçue dans un plot en matériau élastomère porté par la face supérieure 44 de l'élément 12 de soubassement.

L'ensemble de la face avant technique 14 et de l'élément 12 de soubassement peut être amené sous le véhicule 10 lors du montage sur chaîne par un chariot 46 qui porte d'autres organes du véhicule, par exemple un moteur 48.

Comme l'illustre la figure 2, le procédé comporte une deuxième étape, au cours de laquelle la face avant technique 14 est basculée vers l'avant autour du moyen de liaison 40 d'axe transversal. Cette configuration permet d'empêcher que des parties de la face avant technique 14 qui seraient d'un encombrement transversal supérieur à l'encombrement transversal des pendeloques 24 n'entrent en contact avec celles-ci lors de la remontée ultérieur de l'ensemble constitué de la face avant technique 14 et de l'élément de soubassement 12.

Puis, au cours d'une troisième étape qui a été représentée à la figure 3, l'élément 12 de soubassement et la face avant technique 14 en position basculée sont déplacés du bas vers le haut suivant la direction "V" jusqu'au véhicule 10 de manière que la face supérieure 44 de l'élément 12 entre en contact avec l'extrémité inférieure des pendeloques 26.

Au cours d'une quatrième étape qui a été représentée à la figure 4, la face avant technique 14 est basculée vers le véhicule de manière suivant la direction "L" et autour de la direction "T" de manière qu'au moins un premier moyen 50 porté par un bord 52 supérieur de la face avant technique 14 accoste un deuxième moyen 54 complémentaire porté par au moins une des parties 22 de l'élément de structure de caisse opposées transversalement.

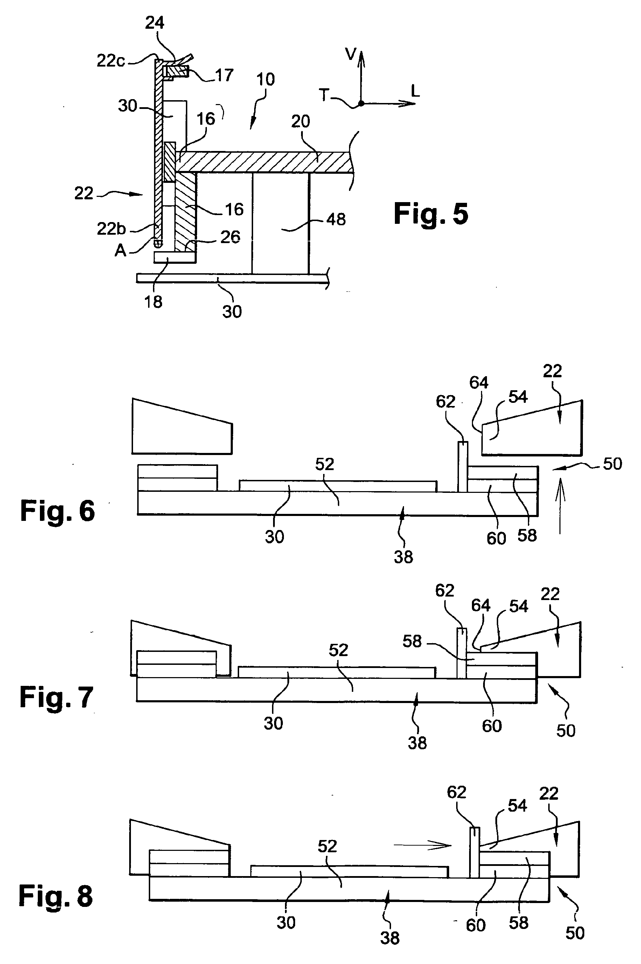

Plus particulièrement, comme l'illustrent les figures 6 à 8, le bord supérieur 52 de la traverse 38 de la face avant technique comporte à chacune de ses extrémités 56 le premier moyen 50 dont un élément 58 de guidage ou "avaloir" comportant au moins une surface inclinée vers le haut d'arrière en avant qui est destinée à monter sur une surface plane 54 correspondante associée formant le second moyen portée par chacune des parties opposées 22 de l'élément de structure de caisse.

Avantageusement, comme l'illustrent les figures 6 à 8, le premier moyen 50 du bord supérieur 52 de la traverse 38 de la face avant technique 14 comporte en avant de l'élément 58 de guidage une surface plane 60 destinée à reposer sur la surface plane correspondante 54 associée portée par chacune des parties de l'élément 22 de structure de caisse.

En effet, au cours d'une cinquième étape, la face avant technique 14 est poussée vers l'arrière sur le véhicule automobile 10 de manière que le premier moyen 50 monte sur le deuxième moyen 54, la face avant technique 14 se soulevant de l'élément de soubassement transversal. Cette configuration permet à la face avant 14 technique de venir en appui sur les parties opposées 22 de l'élément de structure de caisse, tout en quittant son appui sur l'élément 12 de soubassement. Au cours de cette étape, l'élément 58 de guidage franchit la surface plane 54 associée de la partie correspondante de la partie 22 de l'élément de structure de caisse, puis la surface plane 60 du premier moyen 50 vient reposer sur ladite surface plane 54.

L'invention est donc en ceci particulièrement avantageuse qu'elle permet de déterminer la position verticale de la face avant technique 14 par rapport aux parties 22 de l'élément de structure de caisse, et non plus par rapport à l'élément de soubassement 12, ce qui permet une mise en position ultérieure bien plus précise d'un bouclier fixé à la face avant technique par rapport à l'élément 18 de structure de caisse.

Une autre caractéristique particulièrement innovante du procédé selon l'invention est qu'il permet aussi une mise en position transversale de la face avant technique 14.

Comme l'illustre la figure 7, au cours de la cinquième étape, l'avancée de la face avant technique selon la direction "L" provoque aussi l'avancée d'un doigt longitudinal 62 qui, porté par un des côtés du bord supérieur de la face avant technique 14.

Ainsi, comme l'illustre la figure 8, le procédé selon l'invention peut comporter de surcroît une sixième étape au cours de laquelle le doigt longitudinal, est réaligné avec un troisième moyen complémentaire 64 porté une des parties 22 opposées de l'élément de structure de caisse, pour recentrer transversalement la face avant 14 technique.

Le moyen complémentaire 64 est par exemple un élément de référence destiné à coopérer avec le doigt 62 porté par le côté du bord supérieur 52 de la traverse 38 de la face avant technique 14, notamment un perçage destiné à recevoir le doigt 62 ou comme représenté ici une surface plane 64 verticale destinée à recevoir transversalement le doigt 62 en butée.

Le réalignement est alors réalisé par une poussée transversale effectuée sur la face avant technique 14 suivant la direction "T", qui peut alors être définitivement immobilisée par tous les moyens connus de l'état de la technique, notamment par vissage.

L'invention permet donc une mise en position précise, tant verticalement que transversalement, d'une face avant technique 14 sur un élément 18 de structure de caisse de véhicule automobile.

## Revendications

1. Procédé de montage, sur un véhicule automobile (10), d'au moins un élément (12) de soubassement transversal et d'une face avant technique (14) destinée à être montée à une extrémité longitudinale (16) d'un élément (18) de structure de caisse comprenant deux longerons (20) opposés transversalement et deux parties (22) de l'élément (18) de structure de caisse opposées transversalement, **caractérisé en ce qu'**il comporte au moins :
- une première étape au cours de laquelle la face avant (14) technique est positionnée sur un élément (12) de soubassement transversal par l'intermédiaire d'un moyen (40) de liaison autorisant un pivotement de ladite face avant technique (14) autour d'un axe (T) transversal et une translation verticale de ladite face avant technique (14),
- une deuxième étape au cours de laquelle la face avant technique (14) est basculée vers l'avant autour du moyen de liaison (40) d'axe transversal,
- une troisième étape au cours de laquelle l'élément (12) de soubassement et la face avant technique (14) en position basculée sont déplacés du bas vers le haut jusqu'au véhicule (10),
- une quatrième étape au cours de laquelle la face avant technique (14) est basculée de manière qu'au moins un premier moyen (50) porté par un bord supérieur (52) de la face avant technique (14) accoste un deuxième moyen complémentaire (54) porté par au moins une des parties (22) de l'élément (18) de structure de caisse opposées transversalement,
- une cinquième étape au cours de laquelle la face avant (14) technique est poussée vers l'arrière sur le véhicule automobile (10) de manière que le premier moyen (50) monte sur le deuxième moyen (54), la face avant technique (14) se soulevant de l'élément (12) de soubassement transversal.

2. Procédé de montage selon la revendication précédente, **caractérisé en ce qu'**il comporte de surcroît une sixième étape au cours de laquelle un doigt longitudinal (62), porté par un des côtés (56) du bord supérieur (52) de la face avant technique (14), est réaligné avec un troisième moyen (64) complémentaire porté une des parties opposées (22) de l'élément (18) de structure de caisse, pour recentrer transversalement la face avant technique (14).

3. Véhicule (10) pour la mise en oeuvre d'un procédé selon l'une quelconque des revendications 1 à 2, véhicule comportant au moins un élément (18) de structure de caisse dont une extrémité longitudinale (16) comporte deux longerons (20) opposés transversalement et deux parties (22) opposées transversalement recevant une face (14) avant technique (14), la face avant technique (14) pouvant pivoter, pendant le montage, autour d'un axe (T) transversal sur un élément (12) de soubassement transversal par l'intermédiaire d'un moyen (40) de liaison autorisant un pivotement de ladite face avant technique (14) autour de l'axe (T) transversal et une translation verticale de ladite face avant technique (14), un bord supérieur (52) de la face avant technique (14) portant au moins un premier moyen (50) accostant un deuxième moyen (54) complémentaire porté par au moins une des parties (22) de l'élément (18) de structure de caisse opposées transversalement, lorsque la face avant technique (14) est basculée pendant le montage, le premier moyen (50) et le deuxième moyen (54) étant tels que, lorsque la face avant technique (14) est poussée vers l'arrière sur le véhicule pendant le montage, le premier moyen (50) monte sur le deuxième moyen (54) et la face avant se soulève de l'élément (12) de soubassement transversal, la face avant technique (14) comportant une partie centrale (28) porteuse notamment d'éléments (30, 32) de refroidissement du véhicule, de parties latérales (34) opposées fixés aux bords verticaux (36) opposés de la partie centrale (28), et une traverse (38) supérieure comportant un bord supérieur (52).

4. Véhicule (10) selon la revendication précédente, **caractérisé en ce que** le bord supérieur (52) de la traverse (38) de la face avant technique (14) comporte à chacune de ses extrémités un premier moyen (50) dont un élément (58) de guidage ou "avaloir" comportant au moins une surface inclinée vers la haut d'arrière en avant est destinée à monter sur une surface plane (54) correspondante associée formant le second moyen portée par chacune des parties (22) opposées de l'élément (18) de structure de caisse.

5. Véhicule (10) selon la revendication précédente, **caractérisé en ce que** le premier moyen (50) du bord supérieur (52) de la traverse (38) de la face avant technique (14) comporte en avant de l'élément (58) de guidage une surface plane (60) destinée à reposer sur la surface plane (54) correspondante associée portée par chacune des parties (22) de l'élément (18) de structure de caisse.

6. Véhicule (10) selon l'une quelconque des revendications 3 à 5, **caractérisé en ce qu'**une des parties (22) de l'élément de structure de caisse comporte un élément de référence destiné à coopérer avec un doigt (62) porté par un côté (56) du bord supérieur de la traverse (38) de la face avant technique (14), notamment un perçage destiné à recevoir le doigt ou une surface plane (60) destinée à recevoir transversalement le doigt (62) en butée.

## Claims

1. Method for mounting, on a motor vehicle (10), at least one transverse underbody structure element (12) and a technical front panel (14) which is intended to be mounted at a longitudinal end (16) of a body shell structure element (18) comprising two transversely opposed rails (20) and two transversely opposed parts (22) of the body shell structure element (18), **characterized in that** it comprises at least:
- a first step during which the technical front panel (14) is positioned on a transverse underbody structure element (12) via a connecting means (40) that allows said technical front panel (14) to pivot about an axis (T) that is transverse and allows said technical front panel (14) a vertical translational movement,
- a second step during which the technical front panel (14) is pivoted forward about the connecting means (40) of transverse axis,
- a third step during which the underbody structure element (12) and the technical front panel (14) in the tilted position are moved upward as far as the vehicle (10),
- a fourth step during which the technical front panel (14) is pivoted in such a way that at least a first means (50) carried by an upper edge (52) of the technical front panel (14) encounters a complementary second means (54) carried by at least one of the transversely opposed parts (22) of the body shell structure element (18),
- a fifth step during which the technical front panel (14) is pushed rearward on the motor vehicle (10) so that the first means (50) rides up onto the second means (54), the technical front panel (14) lifting up from the transverse underbody structure element (12).

2. Mounting method according to the preceding claim, **characterized in that** it additionally comprises a sixth step during which a longitudinal finger (62) carried by one of the sides (56) of the top edge (52) of the technical front panel (14) is realigned with a complementary third means (64) carried by one of the opposed parts (22) of the body shell structure element (18) in order transversely to re-center the technical front panel (14).

3. Vehicle (10) for implementing a method according to either of Claims 1 and 2, comprising at least one body shell structure element (18) of which one longitudinal end (16) comprises two transversely opposed rails (20) and two transversely opposed parts (22) accepting a technical front panel (14), the technical front panel (14) being able to pivot, during mounting, about a transverse axis (T) on a transverse underbody structure element (12) via a connecting means (40) that allows said technical front panel (14) to pivot about said transverse axis (T) and allows said technical front panel (14) a vertical translational movement, an upper edge (52) of the technical front panel (14) carrying at least one first means (50) that encounters a complementary second means (54) carried by at least one of the transversely opposed parts (22) of the body shell structure element (18), when the technical front panel (14) is pivoted during mounting, the first means (50) and the second means (54) being such that, when the technical front panel (14) is pushed backward on the vehicle during mounting, the first means (50) rides up onto the second means (54) and the technical front panel lifts up from the transverse underbody structure element (12), the technical front panel (14) comprising a central part (28) carrying, in particular, vehicle cooling elements (30, 32), opposed lateral parts (34) fixed to the opposite vertical edges (36) of the central part (28), and a top cross member (38) comprising a top edge (52).

4. Vehicle (10) according to the preceding claim, **characterized in that** the top edge (52) of the cross member (38) of the technical front panel (14) comprises, at each of its ends, a first means (50) including a guide element (58) or "throat" comprising at least one surface that is inclined upward from rear to front and is intended to ride up along an associated corresponding flat surface (54) that forms the second means carried by each of the opposed parts (22) of the body shell structure element (18).

5. Vehicle (10) according to the preceding claim, **characterized in that** the first means (50) of the top edge (52) of the cross member (38) of the technical front panel (14) comprises, forward of the guide element (58), a flat surface (60) intended to rest on the associated corresponding flat surface (54) carried by each of the parts (22) of the body shell structure element (18).

6. Vehicle (10) according to any one of Claims 3 to 5, **characterized in that** one of the parts (22) of the body shell structure element comprises a reference element intended to collaborate with a finger (62) carried by one side (56) of the top edge of the cross member (38) of the technical front panel (14), particularly a drilling intended to accept the finger or a flat surface (60) intended to have the finger (62) butt transversely against it.

## Patentansprüche

1. Verfahren zur Montage auf ein Kraftfahrzeug (10) mindestens eines transversalen Unterstrukturelements (12) und einer technischen Fronttafel (14), die dazu bestimmt ist, an einem Längsende (16) eines Karosseriestrukturelements (18) montiert zu werden, das zwei Längsträger (20) aufweist, die transversal entgegengesetzt sind, und zwei Teile (22) des Karosseriestrukturelements (18), die transversal entgegengesetzt sind, **dadurch gekennzeichnet, dass** es mindestens Folgendes aufweist:
- einen ersten Schritt, bei dem die technische Fronttafel (14) auf einem transversalen Unterstrukturelement (12) über ein Verbindungsmittel (40) positioniert ist, das ein Schwenken der technischen Fronttafel (14) um eine transversale Achse (T) und eine vertikale Verschiebung der technischen Fronttafel (14) erlaubt,
- einen zweiten Schritt, bei dem die technische Fronttafel (14) um das Verbindungsmittel (40) mit transversaler Achse nach vorn gekippt wird,
- einen dritten Schritt, bei dem das Unterstrukturelement (12) und die technische Fronttafel (14) in gekippter Position von unten nach oben bis zum Fahrzeug (10) verlagert werden,
- einen vierten Schritt, bei dem die technische Fronttafel (14) derart gekippt wird, dass mindestens ein erstes Mittel (50), das von einem oberen Rand (52) der technischen Fronttafel (14) getragen wird, an einem zweiten komplementären Mittel (54), das von mindestens einem der Teile (22) des Karosseriestrukturelements (18), das transversal entgegengesetzt ist, getragen wird, andockt,
- einen fünften Schritt, bei dem die technische Fronttafel (14) zur Rückseite auf dem Automobil (10) derart geschoben wird, dass das erste Mittel (50) auf das zweite Mittel (54) steigt, wobei sich die technische Fronttafel (14) von dem transversalen Unterstrukturelement (12) hochhebt.

2. Verfahren zur Montage nach dem vorhergehenden Anspruch, **dadurch gekennzeichnet, dass** es außerdem einen sechsten Schritt aufweist, bei dem ein Längsfinger (62), der von einer der Seiten (56) des oberen Rands (52) der technischen Fronttafel (14) getragen wird, mit einem dritten komplementären Mittel (64), das von einem der entgegengesetzten Teile (22) des Karosseriestrukturelements (18) getragen wird, wieder ausgerichtet wird, um die technische Fronttafel (14) transversal neu zu zentrieren.

3. Fahrzeug (10) zur Umsetzung eines Verfahrens nach einem der Ansprüche 1 bis 2, wobei das Fahrzeug mindestens ein Karosseriestrukturelement (18) aufweist, von dem ein Längsende (16) zwei Längsträger (20) aufweist, die transversal entgegengesetzt sind, und zwei transversal entgegengesetzte Teile (22), die eine technische Fronttafel (14) aufnehmen, wobei die technische Fronttafel (14) während der Montage um eine transversale Achse (T) auf einem transversalen Unterstrukturelement (12) über ein Verbindungsmittel (40) schwenken kann, das ein Schwenken der technischen Fronttafel (14) um die transversale Achse (T) und eine vertikale Verschiebung der technischen Fronttafel (14) erlaubt, wobei ein oberer Rand (52) der technischen Fronttafel (14) mindestens ein erstes Mittel (50) trägt, das an ein zweites komplementäres Mittel (54), das von mindestens einem der transversal entgegengesetzten Teile (22) des Karosseriestrukturelements (18) getragen wird, andockt, wenn die technische Fronttafel (14) während der Montage gekippt wird, wobei das erste Mittel (50) und das zweite Mittel (54) derart sind, dass, wenn die technische Fronttafel (14) während der Montage zu der Rückseite auf das Fahrzeug geschoben wird, das erste Mittel (50) auf das zweite Mittel (54) steigt und sich die Fronttafel von dem transversalen Unterstrukturelement (12) hochhebt, wobei die technische Fronttafel (14) einen zentralen Teil (28) aufweist, der insbesondere Kühlelemente (30, 32) des Fahrzeugs, seitliche entgegengesetzte Teile (34), die an den vertikalen entgegengesetzten Rändern (36) des zentralen Teils (28) befestigt sind, und eine obere Traverse (38), die einen oberen Rand (52) aufweist, trägt.

4. Fahrzeug (10) nach dem vorhergehenden Anspruch, **dadurch gekennzeichnet, dass** der obere Rand (52) der Traverse (38) der technischen Fronttafel (14) an jedem seiner Enden ein erstes Mittel (50) aufweist, von dem ein Führungselement (58) oder "Einweiser", der mindestens eine von hinten nach vorn aufwärts geneigte Oberfläche aufweist, die dazu bestimmt ist, auf eine dazugehörende entsprechende ebene Oberfläche (54) zu steigen, die das zweite von jedem der entgegengesetzten Teile (22) des Karosseriestrukturelements (18) getragene Mittel bildet.

5. Fahrzeug (10) nach dem vorhergehenden Anspruch, **dadurch gekennzeichnet, dass** das erste Mittel (50) des oberen Rands (52) der Traverse (38) der technischen Fronttafel (14) vor dem Führungselement (58) eine ebene Oberfläche (60) aufweist, die dazu bestimmt ist, auf der dazugehörenden entsprechenden ebenen Oberfläche (54), die von jedem der Teile (22) des Karosseriestrukturelements (18) getragen wird, zu ruhen.

6. Fahrzeug (10) nach einem der Ansprüche 3 bis 5, **dadurch gekennzeichnet, dass** einer der Teile (22) des Karosseriestrukturelements ein Bezugselement aufweist, das dazu bestimmt ist, mit einem Finger (62) zusammenzuwirken, der von einer Seite (56) des oberen Rands der Traverse (38) der technischen Fronttafel (14) getragen wird, insbesondere eine Bohrung, die dazu bestimmt ist, den Finger aufzunehmen, oder eine ebene Oberfläche (60), die dazu bestimmt ist, den Finger (62) transversal im Anschlag aufzunehmen.
